# EUROPEAN PATENT APPLICATION

(11) **EP 2 154 036 A1**
(43) Date of publication of application: **17.02.2010**
(21) Application number: 09003385.3
(22) Date of filing: 09.03.2009
(51) Int. Cl.: B60R 25/10

(54) **Mechanical anti-theft device for vehicles having acoustic means capable of signalling a theft attempt**

(30) Priority: 28.07.2008 IT MI20081382
(71) Applicant: TAVOLA S.p.A., 20141 Milano (IT)
(72) Inventor: Cavallo, Adriano, 20089 Rozzano (Milan) (IT)
(74) Representative: La Ciura, Salvatore

(57) **Abstract**

Anti-theft device (1) for vehicles characterized in that it provides the combination of a mechanical device (2,3) suited to engage one or more control units (4,5) of the vehicle to prevent them from working and means (6,7,14,15), associated with the said mechanical device, capable of detecting movements or vibrations and of activating an acoustic alarm.

## Description

The present invention provides a mechanical anti-theft device for vehicles having acoustic means capable of signalling a theft attempt.

Particularly, this anti-theft device can engage one or more control units of the vehicle to prevent them from working, and has an electronic device associated therewith for detecting movements or vibrations and triggering a siren, when such vibrations exceed a threshold value for a given preset time.

In greater detail, this electronic device has a microswitch, which is actuated as the anti-theft device is mechanically closed, a motion sensor capable of detecting even the slightest vibrations, a timer that records the duration of the vibrations detected by the sensor and a microprocessor that receives information from said components and, if needed, according to the selected logic, can trigger the acoustic alarm generated by a siren.

Thus, any theft attempt may be evidently signaled, and deter the thief from tampering the mechanical part of the anti-theft device.

As everybody knows, many vehicles, particularly cars, are stolen everyday, and such thefts are increasing.

This has led to the development of a number of devices for preventing or at least signaling or discouraging such attempts.

For example, devices for preventing engine ignition or mechanical devices for locking the brake or clutch pedal or the steering wheel are known in the art.

These devices are not always successful in preventing vehicle thefts, as well as the problems and damages involved thereby.

Satellite devices are also known in the art, which track the vehicle for easier finding.

Unfortunately, these devices are also incapable of preventing thefts, as they do not provide immediate information about the theft; furthermore, if such theft is not detected in a short time, these devices are useless, because they are often disabled by the expert hands of thieves.

In an attempt to obviate such drawbacks the present invention provides a mechanical anti-theft device for vehicles having acoustic means capable of signalling a theft attempt.

More particularly, the anti-theft device may be a mechanical device having jaws clamped around the pedal controls of the vehicle, and coupled to an electronic device capable of detecting vibrations and movements and, if needed, of triggering a sound alarm of sufficient intensity to attract the attention of passers-by or people proximate to the vehicle to deter the thief prior to any attempt to tamper the mechanical security elements.

The electronic device is automatically turned on when the jaws are clamped by means of a microswitch which is pressed by the arm of one of the jaws.

Upon actuation, the processor only triggers the siren a few seconds after detection of vibrations or movements above the threshold level by the motion sensor.

Such short time allows the driver to properly set the anti-theft device and close the car door without the risk of triggering the siren due to the vibrations caused thereby.

This time is also useful for disabling the alarm, by means of a pushbutton, for instance for storing the antitheft device in the boot when not in use.

After such time, the alarm comes into operation and can no longer be disabled by the above pushbutton.

The present invention will be now described in detail by way of example and without limitation with reference to the accompanying figures, in which:
- Figure 1 is a perspective view of an embodiment of the antitheft device of the invention.
- Figure 2 is a diagrammatic view of the electronic device for detecting vibrations or movements and triggering the siren.

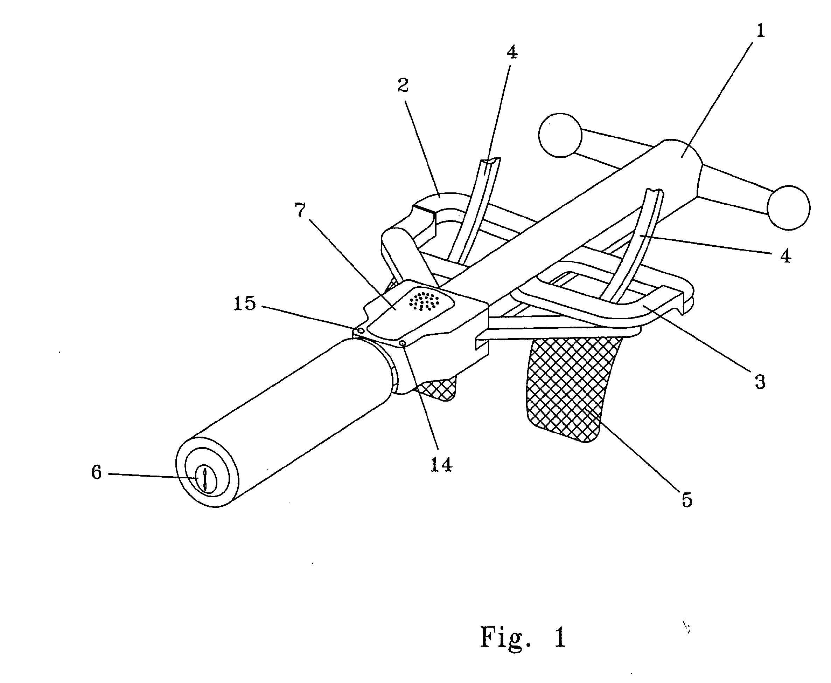

One version of the anti-theft device of the invention is shown in Figure 1 and comprises a tubular member 1 having a pair of jaws 2 and 3 on each side of such tubular member, which are designed to clamp the control levers 4 of the pedals 5, generally the brake and clutch.

The jaws are designed to prevent removal from the pedals when these are clamped and locked by a lock device 6.

The invention relates to an anti-theft device capable of locking the vehicle driving devices, such as the pedals, the steering wheel, the gearbox, etc.

One type of such anti-theft device configuration is better shown in the Italian patent No. 1,256,233.

While reference will be made hereinafter to an anti-theft device of this type, the invention shall not be deemed to be limited to the configuration as described herein.

According to this invention, an electronic device, generally designated by numeral 7, is associated with a type of anti-theft device as described above for detecting movements or vibrations and triggering a siren, when such vibrations exceed a threshold value for a given preset time.

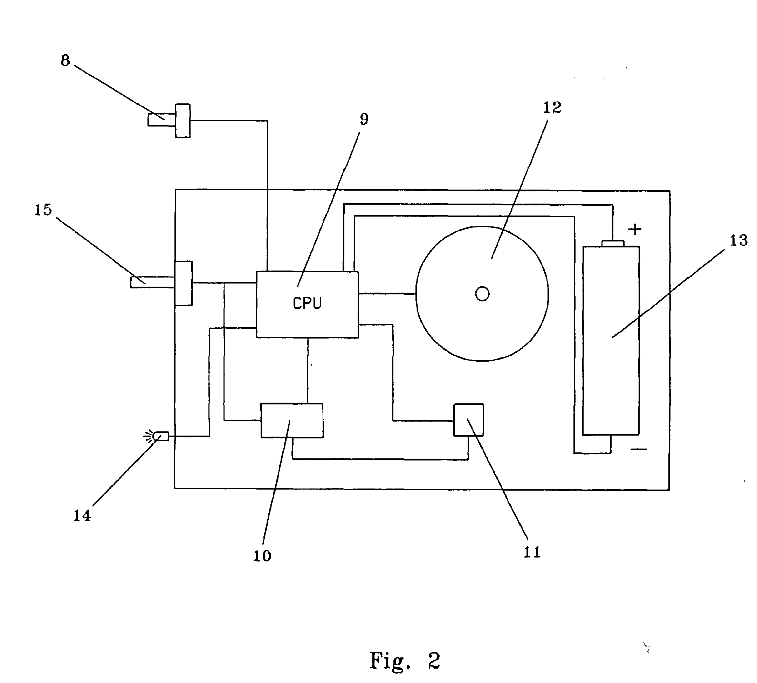

Referring to Figure 2, there is shown a diagrammatic view of the electronic board of the device 7.

Such device comprises a microswitch 8, which is pressed by the jaw 2 when the latter is clamped and thence transmits a logic signal to the microchip 9.

Such microchip is also connected to a timer 10 which counts both the time from the closure of the jaws 2 and 3, using the signal of the microswitch 8, and the duration of the signal transmitted by the motion sensor designated by numeral 11.

The sound alarm is generated by a siren 12 as the latter receives the consent from the microchip 9, when a vibration has been detected for a given continuous time.

The whole circuit is powered by batteries 13 of common type.

The operation of the anti-theft device is as described below.

As both jaws 2 and 3 are closed, the microswitch 11 sends a signal to the microchip 9 and to the timer 10, which starts to count the time.

At the same time, the LED 13 starts to flash and the siren 12 reproduces a short audible beep which confirms that the alarm has been turned on.

From now on, for a given time T1, the microchip will not trigger the siren 12 even though the motion sensor 11 detects vibrations.

This time T1 is designed to allow the driver to set the anti-theft device and to close the car door without unduly triggering the siren.

Conversely, if the anti-theft device is not clamped around the pedals and is closed for storage, e.g. in the vehicle boot, the time T1 may be used for disabling the electronic device by pushing the pushbutton 15 from the outside.

After such time T1, the alarm is finally turned on.

The microchip is programmed to trigger the siren 12 when the sensor 11 has been detecting perceivable vibrations for a time equal to or longer than T2.

If, during an attempted theft, a thief causes continuous vibrations lasting for a time equal to or longer than T2, then the microchip that receives information from the sensor 11 and the timer 10, immediately triggers the siren to warn the passers-by or all the people proximate to the vehicle, thereby deterring the ill-intentioned person from going ahead.

Once the siren has been triggered, it emits its sound during a time T3 of a few tens of seconds, whereupon the whole device resets its parameters and returns to its initial On state.

Should the thief attempt a theft a second time, the siren would be restarted a second time, still for a time T3.

The solution of the invention provides a number of advantages and namely increases the safety of mechanical anti-theft devices like the one described above, due to the possibility of attracting people's attention to the vehicle being stolen and disturbing the thief.

Those of ordinary skill in the art may also envisage changes or variants, that shall be deemed to fall within the scope of the present invention.

## Claims

1. Mechanical anti-theft device for vehicles **characterized in that** it provides for the combination of a mechanical device suited to engage one or more control units of the vehicle to prevent them from working, and of means, associated with the said mechanical device, capable of detecting movements or vibrations and of activating an acoustic alarm when these vibrations exceed a determined threshold level for a preset amount of time.

2. Anti-theft device for vehicles, according to claim 1, **characterized in that** the said mechanical blocking device comprises one or more clamps or tong elements capable of blocking the brake and clutch pedals of the vehicle.

3. Anti-theft device for vehicles, according to claim 1, **characterized in that** the said mechanical device includes an electronic device fitted with a sensor capable of detecting vibrations and movements of the system and of sending the information to a microchip that activates an acoustic alarm generated by a built-in siren.

4. Anti-theft device for vehicles, according to claims 1 and 3, **characterized in that** the said electronic device is fitted with timer control means that send the information concerning the duration of the vibration to the microchip.

5. Anti-theft device for vehicles, according to claims 1 and 3, **characterized in that** the said electronic device is fitted with a microswitch operated at the closing of the clamps that automatically activates the alarm and with a pushbutton to manually deactivate the alarm within a preset time span after the activation.
